# EUROPEAN PATENT APPLICATION

(11) **EP 3 597 475 A1**
(43) Date of publication of application: **22.01.2020**
(21) Application number: 19185062.7
(22) Date of filing: 08.07.2019
(51) Int. Cl.: B60L 53/60, B60L 53/63, B60L 53/67, B60L 53/66

(54) **ELECTRIC VEHICLE CHARGING PARKING STRUCTURE**

(30) Priority: 16.07.2018 US 201816035707
(71) Applicant: Sham, Wellen, Taipei City (TW)
(72) Inventor: Sham, Wellen, Taipei City (TW)
(74) Representative: Sadler, Peter Frederick

(57) **Abstract**

Embodiments facilitate handling of charging parking interactions between electric vehicles (EVs) and parking structures having charging parking spaces. For example, a parking deck has a large number of parking spaces on multiple levels, and is accessible by one or more entrances. Some of the parking spaces in the parking deck are charging parking spaces that each include a EV charging subsystem in communication with a charging parking controller. Upon entering the parking deck, an EV can request charging parking (charging while parking) during a charging parking timeframe. The charging parking controller can compute an interaction schedule of EV parking and/or charging resources of the parking structure according to the charging parking timeframe and can facilitate automatic or manual execution of the scheduled interaction between the requesting EV and the parking structure.

## Description

### FIELD

This invention relates generally to electric vehicle charging, and, more particularly, to electric vehicle charging parking structures.

### BACKGROUND

An electric vehicle (EV) charging station, also called EV charging station, electric recharging point, charging point, or charge point and EVSE (electric vehicle supply equipment), is an element in an infrastructure that supplies electric energy for the recharging of electric vehicles, such as plug-in electric vehicles, including electric cars, neighborhood electric vehicles and plug-in hybrids. As electric vehicles and electric vehicle ownership is expanding, there is a growing need for widely distributed, accessible charging stations. However, various constraints have tended to limit the ability of charging infrastructures to maintain pace with the increase in demand. For example, the availability of charging stations in geographic area can be impacted by limitations on parking space numbers and locations, on power grid capacity, and on other factors.

### BRIEF SUMMARY

Among other things, embodiments provide novel systems and methods for providing parking structures that facilitate concurrent charging of multiple EVs in multiple charging spots. As one example, a parking deck is provided in proximity to one or more office buildings. The parking deck has a large number of parking spaces on multiple levels, and is accessible by one or more entrances. Some of the parking spaces in the parking deck are charging parking spaces that each include an EV charging subsystem, and the EV charging systems are in communication with a charging parking controller (e.g., a central server). Prior to, or upon, entering the parking deck, an EV can request charging parking (i.e., charging while parking) during a charging parking timeframe. In response to the request, the charging parking controller can determine which charging parking spaces are available according to the charging parking timeframe (e.g., and/or further according to characteristics of the EV, the charging parking spaces, etc.), and the charging parking controller can generate a directive identifying the determined charging parking space. The charging parking controller can communicate a directive to the EV to facilitate automatic or manual guidance of the EV to the charging parking spot in the parking deck. Various alternative and additional embodiments and features are described herein.

According to one set of embodiments, a parking structure system is provided for electric vehicle (EV) charging. The parking structure system includes: multiple charging parking spaces, each charging parking space having an associated physical location for EV parking; multiple charging subsystems; and a charging parking controller. Each charging subsystem includes: a charging interface adapted to deliver electric power from a power grid to an EV electrically coupled with the charging interface; and a control unit to direct delivery of the electric power via the charging interface. The charging subsystems are located according to the associated physical locations of the charging parking spaces. The charging parking controller is communicatively coupled with the charging interfaces to: receive a charging parking request associated with a requesting EV and indicating a charging parking timeframe; compute a directive, in response to the charging parking request, identifying a charging parking space as being available for charging the requesting EV in accordance with the charging parking timeframe; and communicate the directive to the requesting EV, such that the EV is guidable to the associated physical location of the identified charging parking space in accordance with the directive.

According to another set of embodiments, a method is provided for processing charging parking interactions between a requesting electric vehicle (EV) and a parking structure having a parking spaces and a charging parking controller. The method includes: receiving a charging parking request via a communications network, the charging parking request associated with a requesting EV and indicating a charging parking timeframe; computing a directive, in response to the charging parking request, the directive identifying a charging parking space of the parking structure as being available for charging the requesting EV in accordance with the charging parking timeframe; and communicating the directive to the requesting EV, such that the EV is guidable to an associated physical location of the identified charging parking space in accordance with the directive.

According to another set of embodiments, a charging parking controller is provided. The controller includes: a communications processor and a directive processor. The communications processor is to communicate with a communications network and has non-transient memory with first executable instructions to receive a charging parking request via the communications network, the charging parking request associated with a requesting electric vehicle (EV) and indicating a charging parking timeframe. The directive processor is coupled with the communications processor and has non-transient memory with second executable instructions to compute a directive, in response to the communications processor receiving the charging parking request. The directive is computed to identify a charging parking space as being available for charging the requesting EV in accordance with the charging parking timeframe, the charging parking space being one of a plurality of parking spaces of a parking structure; and the directive is computed to include guidance instructions to guide the requesting EV to an associated physical location of the identified charging parking space in accordance with the directive.

This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings, and each claim.

The foregoing, together with other features and embodiments, will become more apparent upon referring to the following specification, claims, and accompanying drawings.

### BRIEF DESCRIPTION OF THE DRAWINGS

The present disclosure is described in conjunction with the appended figures:
**FIG. 1** shows an illustrative parking structure system for electric vehicle (EV) charging and parking, according to various embodiments;
**FIG. 2** shows an illustrative implementation of the charging parking controller in context of other structures, according to various embodiments;
**FIG. 3** illustrates a simplified computer system that can be used implement various embodiments described and illustrated herein; and
**FIG. 4** shows an illustrative flow diagram of a method for processing charging parking interactions between a requesting EV and a parking structure, according to various embodiments.

In the appended figures, similar components and/or features may have the same reference label. Further, various components of the same type may be distinguished by following the reference label by a second label (e.g., a lower-case letter) that distinguishes among the similar components. If only the first reference label is used in the specification, the description is applicable to any one of the similar components having the same first reference label irrespective of the second reference label.

### DETAILED DESCRIPTION

Over recent years, personal electric vehicles (including fully electric cars and trucks, plug-in hybrid cars and trucks, and the like) have gained in popularity, and increasing numbers are being manufactured and purchased around the world. The rise in numbers of personal EVs on the road has brought an increased demand for infrastructure to support the EVs, including an increased demand for charging spots to recharge the EV batteries. Presently, many EV owners have home EV charging spots, for example, in their personal or shared garages. Increasingly, EV charging spots are being provided in office and retail parking lots, and the like. Still, such EV charging spots are typically few in number and in few locations; and the resulting limited access to charging infrastructures has tended to limit the proliferation and usability of electric vehicles.

Various considerations have frustrated attempts to increase availability of EV charging spots. One such consideration is that power grid constraints and related costs can limit the quantity of EV charging spots in a particular location. Further, because EV charging points at office and retail locations tend to be in use primarily during business hours can further increase the impact of such uses on the power grid, and can increase the cost (e.g., where power costs increase during peak hours). Another such consideration is that different EVs have different types of interfaces (e.g., complying with different interface standards), including different types of wired and wireless charging interfaces; and different EVs can support different charging characteristics, such as voltage and current levels. Another such consideration is that EV users may desire to charge their EVs while the EVs are parked; but the time needed for recharging may be different from the time needed for parking. For example, an EV may fast-charge in an hour or two, but the EV may continue to occupy the parking space where the charging point is located for the full workday. Accordingly, the charging point may be needlessly occupied for hours by an EV that is fully charged.

Among other things, embodiments are described herein for providing parking structures that facilitate concurrent charging of multiple EVs in multiple charging spots. As one example, a parking deck is provided in proximity to one or more office buildings. The parking deck has a large number of parking spaces on multiple levels, and is accessible by one or more entrances. Some of the parking spaces in the parking deck are charging parking spaces that each include a EV charging subsystem, and the EV charging systems are in communication with a charging parking controller (e.g., a central server). Prior to, or upon, entering the parking deck, an EV can request charging parking (i.e., charging while parking) during a charging parking timeframe. In response to the request, the charging parking controller can determine which charging parking spaces are available according to the charging parking timeframe (e.g., and/or further according to characteristics of the EV, the charging parking spaces, etc.), and the charging parking controller can generate a directive identifying the determined charging parking space. The charging parking controller can communicate a directive to the EV to facilitate automatic or manual guidance of the EV to the charging parking spot in the parking deck. Various alternative and additional embodiments and features are described herein.

Embodiments of the disclosed technology will become clearer when reviewed in connection with the description of the figures herein below. In the following description, numerous specific details are set forth to provide a thorough understanding of the present invention. However, one having ordinary skill in the art should recognize that the invention may be practiced without these specific details. In some instances, circuits, structures, and techniques have not been shown in detail to avoid obscuring the present invention.

Reference herein to an "electric vehicle," "EV," or the like, is intended broadly to include any suitable type of vehicle powered solely or partly by an electric power system that is rechargeable via an external charging interface. For example, an EV can be an all-electric vehicle, a hybrid vehicle, a plug-in hybrid vehicle, or the like. Further, while the drawings and descriptions generally suggest the EV as a car, the EV can be any suitable vehicle, such as an automobile (e.g., car, truck, motorcycle, van, recreational vehicle, bus, transport truck, construction vehicle, etc.), a rail vehicle (e.g., train, etc.), a maritime vehicle (e.g., speed boat, cruise ship, etc.), an aeronautical vehicle (e.g., airplane, flying drone, etc.), or the like. Further, reference herein to an "EV customer," or the like, is intended generally to include any human or corporate customer of EV charging and/or EV parking services described herein. For example, the EV customer can be a present driver or passenger of an EV (e.g., even if that customer is not an owner of the EV), an owner of the EV (even that customer is not the driver or passenger presently or ever), or a holder of an account with a provider of EV charging and/or EV parking services used in association with the EV.

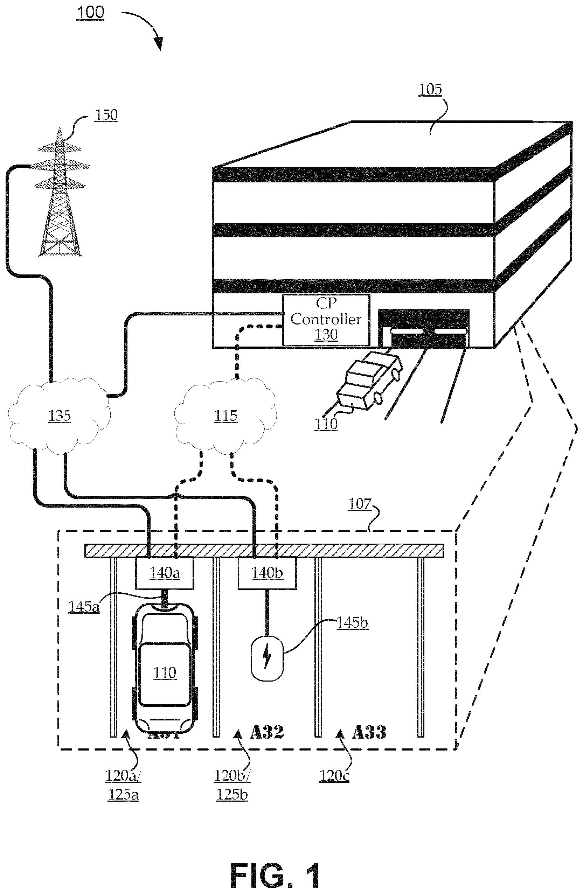

**FIG.** 1 shows an illustrative parking structure system 100 for electric vehicle (EV) 110 charging and parking, according to various embodiments. The parking structure system 100 includes a parking structure 105 that has multiple parking spaces 120. As described herein, at least some of the parking spaces 120 are charging parking spaces 125, each adaptable for charging of an EV parked in the space. A charging parking controller 130 of the parking structure system 100 can direct scheduling and execution of EV 110 charging and parking across the multiple charging parking spaces 125 and/or other parking spaces 120 of the parking structure 105. For example, the charging parking controller 130 can include various features for optimizing pairing of multiple EVs 110 with parking and/or charging resources of the parking structure system 100. According to some embodiments, the charging parking controller 130 can manage power grid functions, schedule and execute EV parking and charging directives, communicate with EVs 110 and structures of the parking structure system 100, facilitate manual EV guidance, execute automated EV guidance, and/or other features.

The illustrated parking structure 105 is a stand-alone parking deck having multiple floors and a large number (e.g., hundreds) of parking spaces 120. The parking structure 105 can be, can include, or can be included in a parking lot, a parking deck, or any other predetermined set of parking spaces 120. Some parking structures 105 have one or more access locations (e.g., entries and/or exits) and throughways by which vehicles can traverse the parking structure 105 between some or all access locations and some or all parking spaces 120. The parking structure 105 can include dedicated physical structures (e.g., a self-standing parking deck or harbor), or the parking structure can be partially or completely formed by non-dedicated structures (e.g., street curbs adjacent to which parking spaces 120 are delineated, office or retail building structures into which parking lots are built, etc.).

Each parking space 120 has an associated physical location for parking, and each parking space 120 can be adapted for one or more types of vehicles. As an example, a parking space 120 for a car can be a demarcated area of asphalt sized to fit the car; and a parking space 120 for a boat can be a demarcated area of water in a harbor sized to fit the boat. In some cases, such as where vehicles using the parking spaces are guided in a fully or partially autonomous manner, the parking spaces 120 can be virtually demarcated (e.g., by computer controlled coordinate mapping). Some or all of the parking spaces 120 in the parking structure 105 are charging parking spaces 125. A charging parking space 125 is a parking space 120 adapted for charging of an EV 110 while the EV 110 is parked in the charging parking space 125.

The parking structure 105 also includes a number of charging subsystems 140. Each charging subsystem 140 includes a charging interface 145 and a control unit 147. Each charging interface 145 is adapted to deliver electric power from a power grid 150 to an EV 110 electrically coupled with the charging interface 145. The power grid 150 can be any suitable power grid 150 for providing sufficient electrical power for EV charging via one or more interfaces. In one implementation, power is received from a municipal power grid 150, which may include electricity generated from fossil fuels, nuclear power, solar power, hydroelectric power, or any other suitable power source. In another implementation, the power grid 150 is a local (e.g., dedicated) power grid 150 for the parking structure 105. For example, the parking structure 105 can include a local generator, solar panels, etc. The charging subsystems 140 can be directly coupled with the power grid 150, or coupled via a power distribution network 135. For example, a parking deck can include one or more electrical panels, and/or other equipment, that form a power distribution network 135 to couple the charging subsystems 140 in the parking deck with a local or municipal power grid 150. In some implementations, the local power grid 150 includes batteries, capacitors, and/or other structures to facilitate power storage, power regulation, load balancing, etc.

Each charging interface 145 can include one or more types of wired interfaces, such as a plug for a plug-in electric or hybrid vehicle that complies with a particular EV charging interface standard. The charging interface 145 can additionally, or alternatively, include one or more types of wireless interfaces for wireless charging of an EV 110. Some examples of wireless charging interfaces and techniques for implementing such interfaces are described in U.S. Patent Application No. 15/601,688, filed on May 22, 2017, titled "Enhanced Wireless Charging," which is hereby incorporated by reference in its entirety. Various charging interfaces 145 can support different charging protocols, such as signaling protocols, voltage and current levels, charge times and profiles, etc.

For added clarity, FIG. 1 shows an illustrative interior portion 107 of the parking structure 105 having a number of illustrative types of parking spaces 120. A first illustrated parking space 120a is also a first charging parking space 125a. The first charging parking space 125a is presently occupied by an EV 110, and the EV 110 is presently coupled with a charging subsystem 140a of the first charging parking space 125a via a wired charging interface 145a. A second illustrated parking space 120b is also a second charging parking space 125b, and the second charging parking space 125b is presently unoccupied. As illustrated, the second charging parking space 125b includes a charging subsystem 140b that has a wireless (under-vehicle) charging interface 145b. A third illustrated parking space 120c (also unoccupied) is not a charging parking space 125 and has no charging subsystem 140 or charging interface 145. As illustrated, each charging parking space 125 can be coupled with the power distribution network 135 (e.g., from which it received electrical power). Further, each charging parking space 125 (and some or all non-charging parking spaces 120 in some implementations) can be coupled with the communications network 115 (via wired and/or wireless communications paths). For example, an EV charging operation can involve the charging parking controller 130 directing the control unit 147 of a charging subsystem 140, via the communications network 115, to actuate its charging interface 145, thereby permitting power to be sinked from the power grid 150 via the power distribution network 135.

Embodiments of the control unit 147 can control power delivery via its respective charging interface 145, for example, by regulating voltage and/or current delivery, executing power deliver protocols or profiles, etc. Embodiments of the control unit 147 can also monitor power characteristics via its respective charging interface 145, such as by communicating signaling with an EV 110 during charging, monitoring voltage and/or current levels being sourced or sinked during charging, and/or monitoring power levels not during charging (e.g., periodically, on demand, etc.). In some implementations, the control unit 147 can actuate or de-actuate its respective charging interface 145 (e.g., including actuating or de-actuating one or more individual interface types, where the charging interface 145 includes multiple interface types). For example, the control unit 147 can switch off power to the charging interface 145 when the charging interface 145 is not in use and/or when a coupled EV 110 is fully charged, for example, to minimize risks of accidental electrocution or electrical fire, EV overcharging, electrical leakage, electromagnetic radiation, etc.

Embodiments of the control unit 147 can facilitate communications between a charging subsystem 140 and the charging parking controller 130. Some embodiments of the control unit 147 are communicatively coupled (e.g., by one or more wired and/or wireless connections) with the charging parking controller 130 via a communications network 115. The communications network can include any suitable public or private, secure or insecure, wired or wireless communications links, and can be implemented as one or more local networks (e.g., a local area network) and/or one or more non-local networks (e.g., the Internet, a wide area network, etc.). In some embodiments, each control unit 147 is associated with a logical address by which the charging parking controller 130 can communicate with the control unit 147.

Each charging subsystem 140 is located according to the associated physical location of a respective one of the charging parking spaces 125. In some embodiments, the location of each charging subsystem 140 is fixed with respect to the physical location of a respective one of the charging parking spaces 125. For example, a charging parking space 125 includes a dedicated charging subsystem 140. In other embodiments, the location of one or more charging subsystems 140 is movable between two or more of the charging parking spaces 125. For example, two or more charging parking spaces 125 can be adapted to share a single charging subsystem 140 either by positioning the charging subsystem 140 in a fixed location that provides charging to either space (e.g., where a wired charging interface 145 can reach both spaces), by implementing some or all of the charging subsystem 140 to be transportable between multiple spaces, or by implementing some or all of the parking spaces 120 to be transportable between a smaller number of charging subsystems 140.

As described above, the parking structure system 100 includes a charging parking controller 130. The charging parking controller 130 can be implemented as one or more server computers, or any other computational system, such as those described below. In some implementations, the charging parking controller 130 is located on site, such as within, or directly adjacent to, the parking structure 105. In other implementations, the charging parking controller 130 is located remote from the parking structure 105. For example, the charging parking controller 130 can be implemented as a cloud-based server, as a remote centralized server that controls multiple parking structure systems 100, etc. In other implementations, certain sub-controllers of the charging parking controller 130 are located on site, while others are located remotely. In one such implementation, on-site sub-controllers handle communications with, and directing of, the charging subsystems 140 and proximate EVs 110 (e.g., local power grid management, EV charging, EV parking guidance, etc.); while remote sub-controllers handle back-end functions (e.g., customer billing) and remote communications (e.g., processing requests from remote EVs 110 and customers).

Embodiments of the charging parking controller 130 are communicatively coupled with the plurality of charging subsystems 140 (e.g., via the respective control units 147). As described above, the communicative coupling can be wired or wireless, secure or insecure, direct or via a communications network 115 or power distribution network 135, and/or in any other suitable manner. By communicating with the charging subsystems 140, the charging parking controller 130 can detect status, health, and/or other features of the charging interfaces 145. In some embodiments, the charging parking controller 130 can monitor (e.g., query, maintain constant monitoring of, etc.) a charging subsystem 140 to determine whether the charging interface 145 of the charging subsystem 140 is presently coupled with an EV 110, whether electrical power is being delivered to the EV 110 via the charging interface 145 (e.g., whether the EV 110 is already fully charged, etc.), whether there is a problem with the charging subsystem 140, etc. In some implementations, the charging interface can be adapted to receive information from a coupled EV 110, and it can communicate some or all of that information to the charging parking controller 130. For example, the charging interface 145 can receive charging-related information (e.g., estimated time or amount of charge remaining until the coupled EV 110 is fully charged), vehicle-related information (e.g., make and model, battery type, etc.), etc. In other implementations, certain charging-related information can be computed by the control unit 147 and/or the charging parking controller 130, such as estimating a time until EV charge completion based on monitoring of EV charging progress, monitoring of power grid capacity, statistical analysis and/or other predictive modeling, etc.

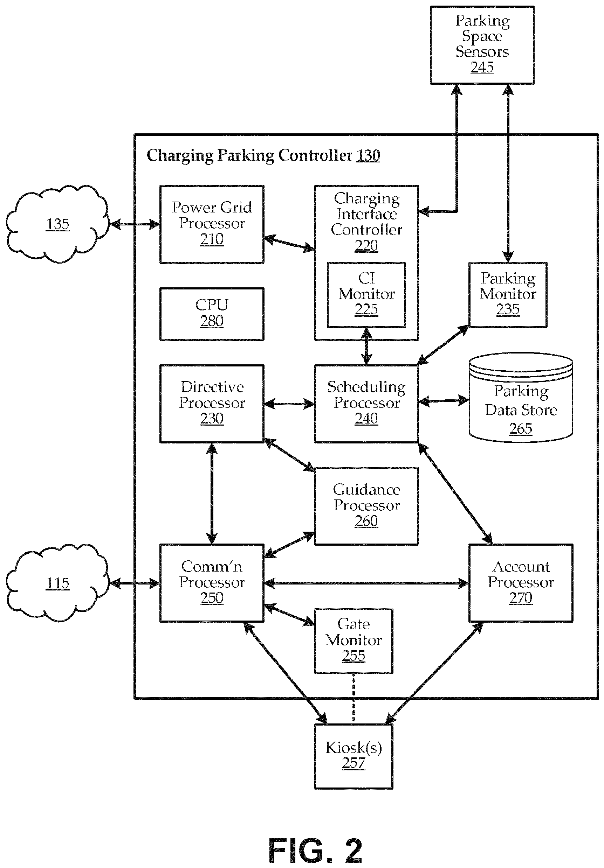

**FIG.** 2 shows an illustrative implementation of the charging parking controller 130 in context of other structures, according to various embodiments. As described above, embodiments of the charging parking controller 130 can include various features for optimizing pairing of multiple EVs 110 with EV parking and/or EV charging resources of a parking structure system, such as the parking structure system 100 of FIG. 1. Embodiments of the charging parking controller 130 can include a central processing unit 280 of one or more processor circuits that is coupled (e.g., via a bus or other suitable architecture) with, and can direct the operations of some or all of, a number of other processor and controller structures. Embodiments of the charging parking controller 130 include some or all of a power grid processor 210, a charging interface controller 220, a communications processor 250, a directive processor 230, a scheduling processor 240, and a guidance processor 260. As illustrated, embodiments can be coupled with external structures. For example, the power grid processor 210 can be coupled with the power distribution network 135, the communications processor 250 can be coupled with the communications network 115, and the charging interface controller 220 can be coupled with parking space sensors 245 (e.g., directly, or via the communications network 115). Though components are illustrated as particular blocks coupled by particular paths, such blocking and coupling is only intended to be illustrative. In other embodiments of the charging parking controller 130, multiple of the illustrated components can be combined into fewer components, illustrated components can be split into multiple components, components can be coupled together differently (e.g., all communications passing through the central processing unit 280), etc. Further, while the various components of the charging parking controller 130 are shown together, embodiments can be implemented with all components collocated, or as some or all components distributed over multiple systems and/or computational environments.

Embodiments of the charging parking controller 130 facilitate handling of charging parking interactions between EVs 110 and a parking structure system. A charging parking interaction generally involves multiple phases: a request phase; a scheduling phase; and an implementation phase. Some embodiments of the charging parking controller 130 are implemented using one or more state machines, and the state machines can operate according to states, or modes, corresponding to the charging parking interaction phases. The request phase involves a charging parking request associated with a requesting EV 110 and associated with a charging parking timeframe. The requesting EV 110 corresponds to an EV 110 that desires to use the EV charging and/or EV parking services of the parking structure system 100. The requesting EV 110 can be identified according to an EV customer identifier (e.g., account number) and/or vehicle identifier (e.g., license plate number, vehicle identification number, identifier on a tag affixed to the EV 110, etc.). The charging parking timeframe corresponds to a time during which the EV 110 is requesting use of the EV charging and/or EV parking services of the parking structure system 100. For example, the charging parking timeframe can indicate a start time and/or end time for EV parking, a more general time window for EV parking, a start time and/or end time for EV charging, and/or a more general time window for EV charging.

Embodiments of the communications processor 250 receive the charging parking request via the communications network 115. The communications processor 250 can include any suitable communications structures, including antennas, wired and wireless ports, protocol handlers, routers and switches, etc. The charging parking request can be received at any suitable time and in any suitable manner. In some implementations, the charging parking request is received well in advance of the charging parking timeframe (e.g., as a one-time or recurring reservation request) from a device of the EV customer, such as from a computer or mobile phone via an Internet reservation portal. In other implementations, the charging parking request is received when the requesting EV 110 is at or near the parking structure (e.g., at an entrance). In some such implementations, the charging parking request is manually issued by, and received from, a device of the EV customer via the communications network 115 (e.g., via a long-range communications network, such as a cellular network; via a short-range local network of the parking structure, such as a WiFi network; or via a local interface, such as a dedicated reader at the parking structure (e.g., a component of a gate monitor 255 that monitors physical access points of the parking structure, detects the presence of a vehicle, etc.) that can have a device interface to interface with the EV customer's device, or has a human interface to interface with the EV customer). In other such implementations, the charging parking request is automatically issued by, and received from, a device of the EV customer via the communications network 115. For example, the EV customer's device (e.g., mobile phone) can detect its location as proximate to an entrance of the parking structure and can issue the charging parking request in response to the detecting; or the charging parking controller 130 (e.g., the gate monitor 255) can detect that the EV 110 is proximate to an entrance, and the communications processor 250 can prompt or direct the EV customer's device to issue the charging parking request in response to the detecting. In other such implementations, the charging parking request is automatically issued by, and received from, an EV 110 (e.g., an in-vehicle communications system) via the communications network 115 when the EV is at a particular location relative to the parking structure (e.g., at the entrance, a predetermined distance or time away from the parking structure, etc.). For example, the EV 110 and/or the charging parking controller 130 can detect the location of the EV 110 as triggering a charging parking request, and the EV 110 can issue, or be prompted or directed to issue, the charging parking request in response to the detecting. In other embodiments, the parking structure 105 includes one or more kiosks 257. Each kiosk 257 can include any suitable hardware and/or software for automatically, or manually, receiving charging parking requests and/or other suitable information. For example, a kiosk 257 can include a parking payment portal with a graphical user interface that permits an EV customer to submit a charging parking request (e.g., by being coupled with the communications processor 250), pay for the request (e.g., by being coupled with the account processor 270), reserve a request, etc. The kiosk(s) 257 can be part of the gate monitor 255, stand-alone structures in communication with the charging parking controller 130 via the communications network 135, or implemented in any other suitable manner.

In response to receiving the charging parking request, the charging parking controller 130 can continue with the scheduling phase. The scheduling phase generally involves the directive processor 230 of the charging parking controller 130 computing a directive identifying a charging parking space 125 (and/or other parking space 120) as being available for charging the requesting EV 110 in accordance with the charging parking timeframe. Computing the directive by the directive processor 230 can involve scheduling of EV charging and/or EV parking resources by the scheduling processor 240, as appropriate in accordance with the charging parking request, the charging parking timeframe, etc. In some embodiments, various components and parking space sensors 245 are monitored by a charging interface monitor 225 and/or a parking monitor 235 to determine (e.g., at the time of computing the directive, or at any other suitable time) the availability and/or characteristics of charging subsystems 140 and/or parking spaces 120.

In some cases, if the charging parking request is only for EV parking services (i.e., no EV charging is being requested, the EV 110 communicates to the charging parking controller 130 that no EV charging is needed, etc.), computing the directive can involve the directive processor 230 identifying one or more available parking spaces 120. In such cases, the directive processor 230 can identify only, or give preference to, those parking spaces 120 that are not charging parking spaces 125. For example, some or all parking spaces 120 can include sensors (e.g., part of the parking space sensors 245) to detect whether a vehicle is presently parked there, which can be monitored by a parking monitor 235; and/or the charging parking controller 130 (e.g., the scheduling processor 240) can maintain a record of which parking spaces 120 are presently being used according to which have been assigned, reserved, left, etc.

In cases where the charging parking request includes a request for both EV parking and EV charging resources, computing the directive can involve the directive processor 230 polling or querying some or all of the charging subsystems 140 to determine which charging interfaces 145 are available, or the charging parking controller 130 otherwise maintaining a record of which charging interfaces 145 are available (e.g., by including a logging function as part of the scheduling processor 240). In some implementations, computing the directive in such cases also involves identifying which charging parking spaces 125 are available, for example, where the EV parking resources are not positionally fixed to the EV charging resources. In some cases, embodiments support EVs 110 with fully or partially automated driving capabilities (e.g., where the charging parking controller 130 can autonomously guide the EV 110 to locations in the parking structure system 100). Such support can be provided by the guidance processor 260, as described below. In such cases, computing the directive can involve more complex scheduling of decoupled EV parking and EV charging resources by the scheduling processor 240.

As an example, suppose the charging parking request indicates that the requesting EV 110 is intending to park in the parking structure 105 for six hours, but it is estimated that the requesting EV 110 only needs around two hours of EV charging. In one implementation, the charging parking controller 130 computes the directive in such a manner that schedules the requesting EV 110 for parking in a non-charging parking space 120 for a first portion of the charging parking timeframe (e.g., for 3.5 hours); schedules the requesting EV 110 for parking in a charging parking space 125 for a second (non-overlapping) portion of the charging parking timeframe (e.g., for 2.5 hours); and generates automated guidance instructions for autonomously driving the requesting EV 110 to, from, and between the non-charging parking space 120 and the charging parking space 125 at the appropriate times according to the computed scheduling. In a second implementation, the charging parking controller 130 computes the directive to schedule the requesting EV 110 for parking in a particular shared charging parking space 125 that has shared access (with one or more other shared charging parking spaces 125) to a charging subsystem 140; and schedules the charging subsystem 140 to be accessible to the particular shared charging parking space 125 during at least two of the six hours of the charging parking timeframe (e.g., but for an amount of time less than the entire charging parking timeframe). The second implementation may or may not involve automated driving of the requesting EV 110.

In some embodiments, the charging parking controller 130 can compute the directive to identify one or more parking spaces 120 further in accordance with additional factors. In some implementations, the one or more parking spaces 120 is identified further according to physical characteristics of the parking spaces 120 and/or the requesting EV 110. For example, different parking spaces 120 and different EVs 110 can have different shapes, sizes, turning radii, etc. An illustrative parking structure 105 has motorcycle parking spaces 120, compact car parking spaces 120, bus parking spaces 120, etc.; and the charging parking controller 130 can compute directives to schedule particular vehicle types to appropriate types of parking spaces 120. Similarly, certain parking spaces 120 can be configured with certain constraints, such as for tandem parking (e.g., where the parking spaces 120 support multiple vehicles in a first-in last-out configuration), or the like. In such cases, the directive can be computed to schedule the parking spaces 120 in a manner that accounts for such constraints. For example, a requesting EV 110 requesting a second charging parking timeframe can be parked behind an already parked EV 110 having a first charging parking timeframe, if the second charging parking timeframe falls completely within the first charging parking timeframe. Characteristics of the parking spaces 120 and/or requesting EV 110 can also include automated-parking capability. For example, certain EVs 110 may be configured to permit the charging parking controller 130 to automatically drive the EV 110 into a parking space 120, assist guiding the EV 110 into a parking space 120, automatically guide the coupling of the charging interface 145 with the EV 110, etc. In such cases, the directive can be computed to select one or more parking spaces 120 that support such automated guidance (e.g., parking spaces 120 for automated parking may be configured with particular types of sensors, may be narrower, etc.). Some examples of automated parking and techniques for implementing such parking are described in U.S. Patent No. 9,827,983, filed on April 13, 2016, titled "Automated Vehicle Parking," which is hereby incorporated by reference in its entirety.

In other implementations, the one or more parking spaces 120 is identified further according to EV charging characteristics. For example, different charging parking spaces 125 can include different types of plugs and/or other wired charging interfaces 145, one or more types of wireless charging interfaces 145, capabilities for different charging profiles (e.g., fast charging, voltage and/or current ramp patterns, etc.), support for different voltage and/or current levels, and/or any other suitable EV charging characteristics. Embodiments of the scheduling processor 240 can be in communication with (e.g., and/or maintain) a parking data store 265. The parking data store 265 can include characteristics data and/or other relevant information about parking spaces 120, charging interfaces 145, and/or other factors usable by the scheduling processor 240 in scheduling EV parking and/or EV charging resources.

In other implementations, the one or more parking spaces 120 is identified further according to EV customer account characteristics. The account information can be maintained and processed in any suitable manner, such as by an account processor 270. For example, EV customers at particular payment tiers (e.g., premium account holders) can have access to premium parking spots 120, priority or guaranteed EV charging resources, automated valet services, etc. Similarly, some implementations can support allocation of EV charging resources based on pre-payment, or the like (e.g., an EV customer can pre-pay, or pre-authorize payment for one hour of EV charging, full charging, etc.). In some embodiments, computing the directive can involve the charging parking controller 130 estimating, or otherwise computing, the charging parking timeframe for the requesting EV 110. For example, the scheduling processor 240 can include computational functions configured so that the charging parking timeframe can be computed based on pre-payment for a specific parking duration, estimation according to statistical processing of prior parking behavior for the requesting EV 110, credentials of the EV 110 or EV owner (e.g., whether the EV owner is an employee or visitor, etc.), and/or any other suitable factors.

In some embodiments, computing the directive can involve the guidance processor 260 generating guidance information for getting the requesting EV 110 from its present location, or any other suitable location, to an identified one of the parking spaces 120. The directions can be part of the directive. Having generated the directive (e.g., with suitable scheduling information, guidance information, etc.), some or all of the directive can be communicated to the EV 110 by the directive processor 230 via the communications processor 250 and the communications network 115. In various implementations, some or all directive information can be communicated to an in-vehicle computational system of the EV 110; and/or some or all directive information can be communicated to a device of the EV customer (e.g., the EV driver's mobile phone).

After computing and communicating the directive, some embodiments can proceed with the implementation phase of the charging parking interaction. The implementation phase can involve assisting the requesting EV 110 in reaching one or more parking spaces 120 in accordance with the directive, and monitoring and/or controlling EV charging of the requesting EV 110 during at least part of the charging parking timeframe. In some embodiments, the implementations phase also involves facilitating returning the EV 110 to the EV customer upon completion of the charging parking interaction (e.g., or at another time, where supported), account processing (e.g., crediting or debiting the EV customer's account, as appropriate, in accordance with the charging parking interaction), etc. In some embodiments, the guidance processor 260 uses mapping data and a mapping application automatically to generate turn-by-turn directions in accordance with the charging parking request. The directions can be communicated (e.g., as part of the directive, or at any suitable time) to a mobile device of the EV customer, to an in-vehicle navigation system, or in any other suitable manner. In other embodiments, the guidance processor 260 can communicate real-time electronic driving control signals via the communications processor 250 to the EV 110. The signals can electronically direct driving functions of the requesting EV 110, such that the charging parking controller 130 can automatically drive (remote control) the requesting EV 110 to a parking space 120 identified in the scheduling phase. The automated guiding can involve any suitable type of control. In some implementations, the EV 110 is configured to permit remote electronic control of its driving functions by the charging parking controller 130. In other implementations, a human driver can position the EV 110 relative to a mechanical carriage system (e.g., a conveyor system, or the like), and the mechanical carriage system can mechanically move the EV 110 to the identified parking space 120. Similarly, upon completion of the charging parking interaction, some embodiments can guide the EV 110 out of the parking structure using any of the techniques described above, or any other suitable technique.

When the EV 110 is in an appropriate charging parking space 125 and scheduled for EV charging (e.g., both according to the computed directive), the implementation phase can involve the charging parking controller 130 directing functions of the EV charging. For example, a charging interface controller 220 of the charging parking controller 130 can direct the control unit 147 of the appropriate charging subsystem 140 to deliver electrical power (e.g., according to a predetermined EV charging profile) to the parked EV 110 via an appropriate interface type of the charging interface 145 coupled with the parked EV 110. Over the course of the EV charging, the charging interface controller 220 can monitor and control how much power is being delivered from the power distribution network 135 (e.g., from the power grid 150) to the EV 110, can detect and respond to faults or other conditions, can shut down charging at a predetermined time (e.g., at a time according to the charging parking timeframe, at a particular charge state of the battery, etc.), etc.

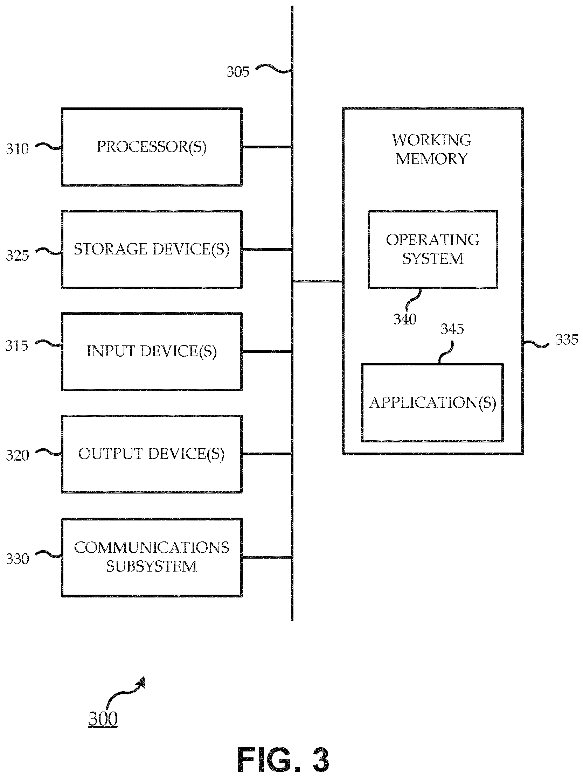

**FIG. 3** illustrates a simplified computer system 300 that can be used implement various embodiments described and illustrated herein. The computer system 300 can be used to implement some or all of the various computational environments described herein, such as the charging parking controller 130, or certain components thereof. Further, embodiments of the computer system 300 can perform some or all of the steps of the methods provided by various embodiments. It should be noted that FIG. 3 is meant only to provide a generalized illustration of various components, any or all of which may be utilized as appropriate. FIG. 3, therefore, broadly illustrates how individual system elements may be implemented in a relatively separated or relatively more integrated manner.

The computer system 300 is shown comprising hardware elements that can be electrically coupled via a bus 305, or may otherwise be in communication, as appropriate. The hardware elements may include one or more processors 310, including without limitation one or more general-purpose processors and/or one or more special-purpose processors such as digital signal processing chips, graphics acceleration processors, and/or the like; one or more input devices 315, which can include without limitation a mouse, a keyboard, a camera, and/or the like; and one or more output devices 320, which can include without limitation a display device, a printer, and/or the like.

The computer system 300 may further include and/or be in communication with one or more non-transitory storage devices 325, which can comprise, without limitation, local and/or network accessible storage, and/or can include, without limitation, a disk drive, a drive array, an optical storage device, a solid-state storage device, such as a random access memory ("RAM"), and/or a read-only memory ("ROM"), which can be programmable, flash-updateable, and/or the like. Such storage devices may be configured to implement any appropriate data stores, including without limitation, various file systems, database structures, and/or the like.

The computer system 300 might also include a communications subsystem 330, which can include without limitation a modem, a network card (wireless or wired), an infrared communication device, a wireless communication device, and/or a chipset such as a Bluetooth™ device, an 302.11 device, a WiFi device, a WiMax device, cellular communication facilities, etc., and/or the like. The communications subsystem 330 may include one or more input and/or output communication interfaces to permit data to be exchanged with a network such as the network described below to name one example, other computer systems, television, and/or any other devices described herein. Depending on the desired functionality and/or other implementation concerns, a portable electronic device or similar device may communicate image and/or other information via the communications subsystem 330. In other embodiments, a portable electronic device, e.g. the first electronic device, may be incorporated into the computer system 300, e.g., an electronic device as an input device 315. In some embodiments, the computer system 300 will further comprise a working memory 335, which can include a RAM or ROM device, as described above.

The computer system 300 also can include software elements, shown as being currently located within the working memory 335, including an operating system 340, device drivers, executable libraries, and/or other code, such as one or more application programs 345, which may comprise computer programs provided by various embodiments, and/or may be designed to implement methods, and/or configure systems, provided by other embodiments, as described herein. Merely by way of example, one or more procedures described with respect to the methods discussed above, such as those described in relation to FIG. 3, might be implemented as code and/or instructions executable by a computer and/or a processor within a computer; in an aspect, then, such code and/or instructions can be used to configure and/or adapt a general purpose computer or other device to perform one or more operations in accordance with the described methods.

A set of these instructions and/or code may be stored on a non-transitory computer-readable storage medium, such as the storage device(s) 325 described above. In some cases, the storage medium might be incorporated within a computer system, such as computer system 300. In other embodiments, the storage medium might be separate from a computer system e.g., a removable medium, such as a compact disc, and/or provided in an installation package, such that the storage medium can be used to program, configure, and/or adapt a general purpose computer with the instructions/code stored thereon. These instructions might take the form of executable code, which is executable by the computer system 300 and/or might take the form of source and/or installable code, which, upon compilation and/or installation on the computer system 300 e.g., using any of a variety of generally available compilers, installation programs, compression/decompression utilities, etc., then takes the form of executable code.

It will be apparent to those skilled in the art that substantial variations may be made in accordance with specific requirements. For example, customized hardware might also be used, and/or particular elements might be implemented in hardware, software including portable software, such as applets, etc., or both. Further, connection to other computing devices such as network input/output devices may be employed.

As mentioned above, in one aspect, some embodiments may employ a computer system such as the computer system 300 to perform methods in accordance with various embodiments of the technology. According to a set of embodiments, some or all of the procedures of such methods are performed by the computer system 300 in response to processor 310 executing one or more sequences of one or more instructions, which might be incorporated into the operating system 340 and/or other code, such as an application program 345, contained in the working memory 335. Such instructions may be read into the working memory 335 from another computer-readable medium, such as one or more of the storage device(s) 325. Merely by way of example, execution of the sequences of instructions contained in the working memory 335 might cause the processor(s) 310 to perform one or more procedures of the methods described herein. Additionally or alternatively, portions of the methods described herein may be executed through specialized hardware.

The terms "machine-readable medium" and "computer-readable medium," as used herein, refer to any medium that participates in providing data that causes a machine to operate in a specific fashion. In an embodiment implemented using the computer system 300, various computer-readable media might be involved in providing instructions/code to processor(s) 310 for execution and/or might be used to store and/or carry such instructions/code. In many implementations, a computer-readable medium is a physical and/or tangible storage medium. Such a medium may take the form of a non-volatile media or volatile media. Non-volatile media include, for example, optical and/or magnetic disks, such as the storage device(s) 326. Volatile media include, without limitation, dynamic memory, such as the working memory 336.

Common forms of physical and/or tangible computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, EPROM, a FLASH-EPROM, any other memory chip or cartridge, or any other medium from which a computer can read instructions and/or code.

Various forms of computer-readable media may be involved in carrying one or more sequences of one or more instructions to the processor(s) 310 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system 300.

The communications subsystem 330 and/or components thereof generally will receive signals, and the bus 305 then might carry the signals and/or the data, instructions, etc. carried by the signals to the working memory 335, from which the processor(s) 310 retrieves and executes the instructions. The instructions received by the working memory 335 may optionally be stored on a non-transitory storage device 325 either before or after execution by the processor(s) 310.

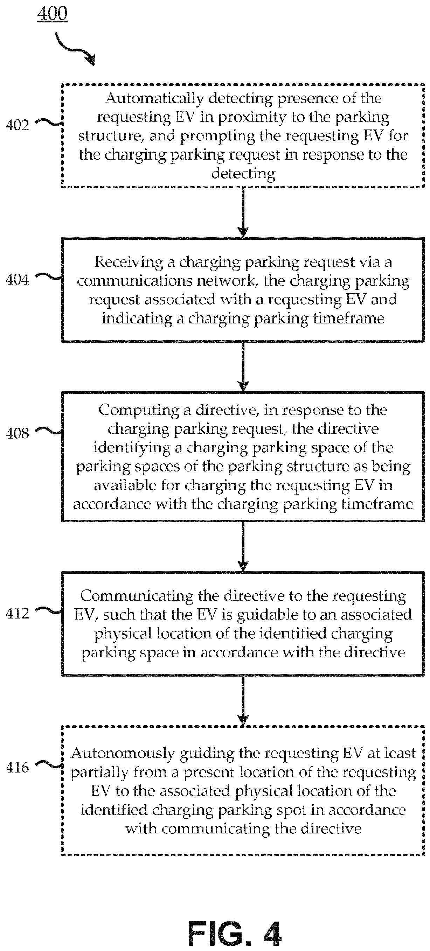

**FIG. 4** shows an illustrative flow diagram of a method 400 for processing charging parking interactions between a requesting EV and a parking structure, according to various embodiments. Embodiments of the method 400 begin at stage 404 by receiving a charging parking request via a communications network. The charging parking request can be associated with a requesting EV and can indicate a charging parking timeframe. The request can be received in any suitable manner. For example, at stage 402, some embodiments automatically detect presence of the requesting EV in proximity to the parking structure and prompt the requesting EV for the charging parking request in response to the detecting. In such embodiments, the receiving can be in response to the prompting.

At stage 408, embodiments can compute a directive in response to the charging parking request. The directive can identify a charging parking space of the parking spaces of the parking structure as being available for charging the requesting EV in accordance with the charging parking timeframe. Identifying the charging parking space can include determining one or more physical and/or electrical vehicle characteristics of the requesting EV in accordance with the charging parking request; and querying a parking data store to identify the charging parking space as one of the charging parking spaces that has associated one or more physical and/or electrical parking space characteristics corresponding to the determined physical and/or electrical vehicle characteristics of the requesting EV. Identifying the charging parking space can also, or alternatively, include determining an account characteristic of an EV customer associated with the charging parking request; and querying a parking data store to identify the charging parking space as one of the charging parking spaces that has an associated account characteristic corresponding to the determined account characteristic of the EV customer.

In some embodiments, the computing at stage 408 can include parsing the charging parking timeframe to determine an EV parking timeframe and an EV charging timeframe; and identifying the charging parking space as having physical availability for EV parking for at least the EV parking timeframe, and having electrical availability for EV charging for at least the EV charging timeframe. In certain embodiments, the computing at stage 408 includes: parsing the charging parking timeframe to determine an EV parking timeframe and an EV charging timeframe, wherein the EV charging timeframe is shorter than the EV parking timeframe; identifying a parking time window in accordance with the EV parking timeframe, the parking time window having a parking start time and a parking end time; identifying the charging parking space as being available for a charging portion of the parking time window, the charging portion having a duration corresponding to the EV charging timeframe that is shorter than the parking time window; identifying a non-charging parking space as being available for a non-charging portion of the parking time window not overlapping with the charging time window; and generating a set of driving instructions to guide the requesting EV, such that the requesting EV is parked in the identified charging parking space during the charging portion of the parking time window and is parked in the identified non-charging parking space during the non-charging portion of the parking time window.

At stage 412, embodiments can communicate the directive to the requesting EV, such that the EV is guidable to an associated physical location of the identified charging parking space in accordance with the directive. Some embodiments, at stage 416, can autonomously guide the requesting EV at least partially from a present location of the requesting EV to the associated physical location of the identified charging parking spot in accordance with communicating the directive.

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of exemplary configurations including implementations. However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process which is depicted as a schematic flowchart or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used without departing from the spirit of the disclosure. For example, the above elements may be components of a larger system, wherein other rules may take precedence over or otherwise modify the application of the technology. Also, a number of steps may be undertaken before, during, or after the above elements are considered. Accordingly, the above description does not bind the scope of the claims.

As used herein and in the appended claims, the singular forms "a", "an", and "the" include plural references unless the context clearly dictates otherwise. Thus, for example, reference to "a user" includes a plurality of such users, and reference to "the processor" includes reference to one or more processors and equivalents thereof known to those skilled in the art, and so forth.

Also, the words "comprise", "comprising", "contains", "containing", "include", "including", and "includes", when used in this specification and in the following claims, are intended to specify the presence of stated features, integers, components, or steps, but they do not preclude the presence or addition of one or more other features, integers, components, steps, acts, or groups.

## Claims

1. A parking structure system for electric vehicle (EV) charging, the parking structure system comprising:
a plurality of charging parking spaces, each charging parking space having an associated physical location for EV parking;
a plurality of charging subsystems, each comprising:
a charging interface adapted to deliver electric power from a power grid to an EV electrically coupled with the charging interface; and
a control unit to direct delivery of the electric power via the charging interface;
the charging subsystems located according to the associated physical locations of the charging parking spaces; and
a charging parking controller, communicatively coupled with the plurality of charging interfaces, to:
receive a charging parking request associated with a requesting EV and indicating a charging parking timeframe;
compute a directive, in response to the charging parking request, identifying a charging parking space of the plurality of charging parking spaces as being available for charging the requesting EV in accordance with the charging parking timeframe; and
communicate the directive to the requesting EV, such that the EV is guidable to the associated physical location of the identified charging parking space in accordance with the directive.

2. The parking structure system of claim 1, further comprising:
a parking structure having an entrance, a plurality of delineated parking spaces, and thruways to provide vehicle access between the entrance and the plurality of delineated parking spaces, at least a portion of the delineated parking spaces being the plurality of charging parking spaces.

3. The parking structure system of claim 1 or 2, wherein the charging parking controller is further configured to:
communicate the directive to the requesting EV, subsequent to computing the directive, in accordance with a location of the requesting EV relative to the parking structure.

4. The parking structure system of any preceding claim, wherein each of the charging subsystems is associated with a respective one of the charging parking spaces and is located in fixed relationship to the physical location of the associated respective one of the charging parking spaces.

5. The parking structure system of any preceding claim, further comprising:
a communications network coupled with the charging parking controller,
wherein each charging interface is coupled with a control unit, the control units being communicatively coupled with the charging parking controller via the communications network, and
wherein computing the directive comprises monitoring at least a portion of the control units via the communications network to determine a power delivery status of at least a portion of the charging interfaces,
such that the directive identifies the charging parking space of the plurality of charging parking spaces as being available for charging the requesting EV further in accordance with the power delivery status of at least the portion of the charging interfaces.

6. The parking structure system of any preceding claim, wherein at least one of the charging interfaces comprises:
a wireless charging interface to wirelessly couple with the requesting EV for wireless EV charging of the requesting EV and/or
wherein at least one of the charging interfaces comprises a wired charging interface to physically couple with a port of the requesting EV for wired EV charging of the requesting EV; and/or
wherein the parking structure system further comprises a power distribution network that couples the plurality of charging subsystems with the power grid.

7. The parking structure system of any preceding claim, wherein:
the charging parking controller comprises a guidance processor to compute a set of driving instructions to guide the requesting EV from a present position of the EV to the associated physical location of the identified charging parking spot;
the charging parking controller is further configured to detect a present location of the requesting EV; and
the charging parking controller is configured to compute the directive further to comprise the set of driving instructions in accordance with the present location of the requesting EV, such that the EV is guidable to the associated physical location of the identified charging parking spot in accordance with the directive; and
wherein, optionally:
the guidance processor is further configured autonomously to control driving of the requesting EV at least partially from the present location to the associated physical location of the identified charging parking spot according to the set of driving instructions.

8. A method for processing charging parking interactions between a requesting electric vehicle (EV) and a parking structure having a plurality of parking spaces and a charging parking controller, the method comprising:
receiving a charging parking request via a communications network, the charging parking request associated with a requesting EV and indicating a charging parking timeframe;
computing a directive, in response to the charging parking request, the directive identifying a charging parking space of the plurality of parking spaces of the parking structure as being available for charging the requesting EV in accordance with the charging parking timeframe; and
communicating the directive to the requesting EV, such that the EV is guidable to an associated physical location of the identified charging parking space in accordance with the directive.

9. The method of claim 8, further comprising:
autonomously guiding the requesting EV at least partially from a present location of the requesting EV to the associated physical location of the identified charging parking spot in accordance with communicating the directive.

10. The method of claim 8 or 9, further comprising:
automatically detecting presence of the requesting EV in proximity to the parking structure; and
prompting the requesting EV for the charging parking request in response to the detecting,
wherein the receiving is in response to the prompting.

11. The method of any of claims 8 to 10, wherein computing the directive comprises:
parsing the charging parking timeframe to determine an EV parking timeframe and an EV charging timeframe; and
identifying the charging parking space as having physical availability for EV parking for at least the EV parking timeframe, and having electrical availability for EV charging for at least the EV charging timeframe.

12. The method of any of claims 8 to **Error! Reference source not found.,** wherein identifying the charging parking space comprises:
determining a physical vehicle characteristic of the requesting EV in accordance with the charging parking request; and
querying a parking data store to identify the charging parking space as one of the plurality of charging parking spaces that has an associated physical parking space characteristic corresponding to the determined physical vehicle characteristic of the requesting EV; and/or
wherein identifying the charging parking space comprises:
determining an electrical vehicle characteristic of the requesting EV in accordance with the charging parking request; and
querying a parking data store to identify the charging parking space as one of the plurality of charging parking spaces that has an associated electrical parking space characteristic corresponding to the determined electrical vehicle characteristic of the requesting EV; and/or
wherein identifying the charging parking space comprises:
determining an account characteristic of an EV customer associated with the charging parking request; and
querying a parking data store to identify the charging parking space as one of the plurality of charging parking spaces that has an associated account characteristic corresponding to the determined account characteristic of the EV customer.

13. The method of any of claims 8 to 12, wherein computing the directive comprises:
parsing the charging parking timeframe to determine an EV parking timeframe and an EV charging timeframe, wherein the EV charging timeframe is shorter than the EV parking timeframe;
identifying a parking time window in accordance with the EV parking timeframe, the parking time window having a parking start time and a parking end time;
identifying the charging parking space as being available for a charging portion of the parking time window, the charging portion having a duration corresponding to the EV charging timeframe that is shorter than the parking time window;
identifying a non-charging parking space as being available for a non-charging portion of the parking time window not overlapping with the charging time window; and
generating a set of driving instructions to guide the requesting EV, such that the requesting EV is parked in the identified charging parking space during the charging portion of the parking time window and is parked in the identified non-charging parking space during the non-charging portion of the parking time window.

14. A charging parking controller comprising:
a communications processor to communicate with a communications network and having non-transient memory with first executable instructions to receive a charging parking request via the communications network, the charging parking request associated with a requesting electric vehicle (EV) and indicating a charging parking timeframe; and
a directive processor coupled with the communications processor and having non-transient memory with second executable instructions to compute a directive, in response to the communications processor receiving the charging parking request,
such that the directive is computed to identify a charging parking space as being available for charging the requesting EV in accordance with the charging parking timeframe, the charging parking space being one of a plurality of parking spaces of a parking structure; and
such that the directive is computed to comprise guidance instructions to guide the requesting EV to an associated physical location of the identified charging parking space in accordance with the directive.

15. The charging parking controller of claim 14, further comprising:
a guidance processor coupled with the communications processor and having non-transient memory with third executable instructions to autonomously guide the requesting EV at least partially from a present location of the requesting EV to the associated physical location of the identified charging parking spot in accordance with the directive.
